(19) Europäisches Patentamt / European Patent Office / Office européen des brevets

(11) **EP 2 410 669 A1**

(12) **EUROPEAN PATENT APPLICATION**
published in accordance with Art. 153(4) EPC

(43) Date of publication:
**25.01.2012 Bulletin 2012/04**

(51) Int Cl.:
*H04B 7/26* (2006.01)  *H04B 1/707* (2011.01)
*H04W 4/12* (2009.01)  *H04W 24/10* (2009.01)

(21) Application number: **10753135.2**

(22) Date of filing: **17.03.2010**

(86) International application number:
**PCT/CN2010/071114**

(87) International publication number:
**WO 2010/105568 (23.09.2010 Gazette 2010/38)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **17.03.2009   CN 200910119482**

(71) Applicant: **Panasonic Corporation**
**Kadoma-shi**
**Osaka 571-8501 (JP)**

(72) Inventors:
 • **ZHANG, Zhi**
  **Beijing 100080 (CN)**
 • **XU, Ming**
  **Beijing 100080 (CN)**

 • **HOSHINO, Masayuki**
  **Osaka 540-6207 (JP)**
 • **IMAMURA, Daichi**
  **Osaka 571-8501 (JP)**
 • **NISHIO, Akihiko**
  **Osaka 571-8501 (JP)**
 • **MIYOSHI, Kenichi**
  **"deceased" (JP)**

(74) Representative: **Grünecker, Kinkeldey, Stockmair & Schwanhäusser**
**Anwaltssozietät**
**Leopoldstrasse 4**
**80802 München (DE)**

(54) **METHOD AND DEVICE FOR ADJUSTING TIMING ADVANCE IN UPLINK MULTIPLE POINTS RECEPTION**

(57)   A method and device for adjusting a timing advance in a communication system composed of a mobile terminal and multiple base stations is provided. The method includes steps: the multiple base stations measures channel latencies and powers of channel responses between the mobile terminal and the multiple base stations separately; the non-serving base station in the multiple base stations reports the channel latency and the power measured to a serving base station; and the serving base station determines the timing advance of the uplink of the mobile terminal according to the channel latency and the power received and the channel latency and the power which are measured by the serving base station itself, and informs the mobile base station of the timing advance. By using the method and the device, the useful power received by the uplink multi-base stations can be optimized, and the interference power can be effectively reduced.

FIG.4

**Description**

Technical Field

The present invention relates to a technology for uplink synchronization and uplink multiple-base-station coordination in the communication field. More particularly, the present invention relates to time advancement amount adjustment in uplink multipoint reception in a mobile communication system.

Background Art

In an uplink of a radio communication system based on orthogonal frequency division multiplexing (OFDM) or time division multiple access (TDMA), there is one reception time window. In an orthogonal frequency division multiplexing system, this time window is a cyclic prefix, and in a time division multiple access system, this window is a guard interval. A transmission signal of a terminal is only correctly received and demodulated when it reaches a base station within a time window, and in other cases an arriving signal changes to interference, thereby degrading uplink performance.

However, in an uplink there is propagation delay from a terminal to a base station, and uplink propagation delay must be compensated for in order to ensure that a terminal signal is able to reach the base station within a time window. In an actual radio communication system, uplink propagation delay is measured by a base station, this delay is reported to a terminal as a time advancement amount, and the terminal advances its own transmission timing by this time advancement amount, thereby compensating for terminal signal uplink propagation delay, and enabling a terminal signal to reach the base station at the start of a time window. Consequently, in a point-to-point uplink, a time advancement amount is set to uplink propagation delay.

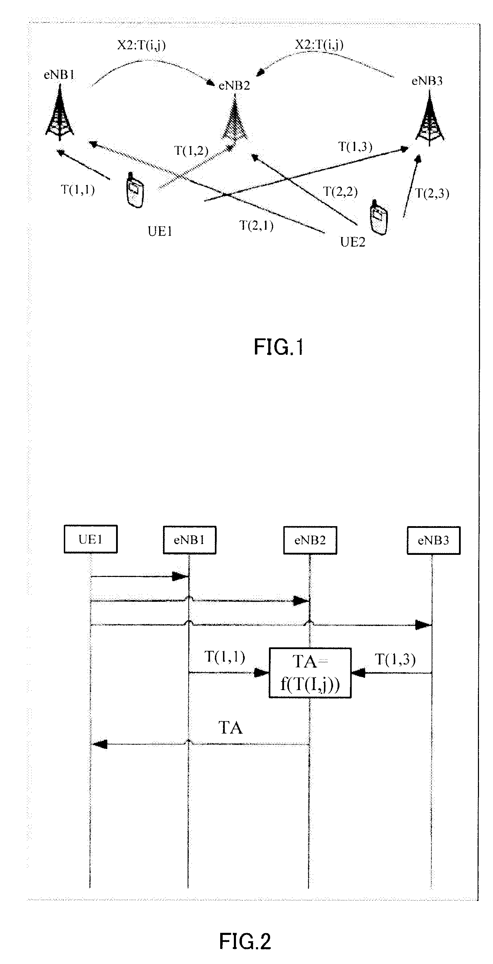

However, when a plurality of base stations perform coordinated reception of uplink signals, the situation becomes complicated. FIG.1 shows the framework of a system in which a plurality of base stations perform coordinated reception of uplink signals. As shown in FIG. 1, there are a plurality of base stations (three being shown here) and mobile stations (two being shown here), and it is assumed here that base station eNB 2 is the serving station of mobile terminals UE 1 and UE 2, time delays for the arrival of a signal transmitted by mobile terminal UE 1 at eNB 1, eNB 2, and eNB 3 are T (1, 1), T (1, 2), and T (1, 3), respectively, and time delays for the arrival of a signal transmitted by mobile terminal UE 2 at eNB 1, eNB 2, and eNB 3 are T (2, 1), T (2, 2), and T (2, 3), respectively.

Due to the effects of the actual communication environment, there is a possibility that none of the propagation delays with which a signal transmitted by a terminal reaches a plurality of receiving base stations will coincide, but a terminal can only change transmission timing in line with one time advancement amount, and calculation of this time advancement amount is an important factor affecting uplink performance. There are two conventional methods of setting a time advancement amount in such a situation, referred to here as method 1 and method 2. Method 1 is to set a time advancement amount to an uplink propagation delay from a terminal to a serving station. Method 2 is to set a time advancement amount to the shortest of a plurality of propagation delays.

When method 1 is used, or if the propagation delay from a terminal to a serving station is not the shortest delay, there is a terminal signal that arrives at a base station before a reception time window, and interference is caused. When method 2 is used, there is no terminal signal that arrives at a base station before a reception time window, and method 2 can ensure that all uplink signals reach a base station within a reception time window if the difference between the maximum propagation delay and minimum propagation delay does not exceed the width of the reception time window. Although method 1 and method 2 differ in the algorithms that actually set a time advancement amount, both are similar in terms of signaling flow.

FIG.2 is a signaling flowchart showing an algorithm that sets a time advancement amount in conventional technology. As shown in FIG.2, when three base stations eNB 1, eNB 2, and eNB 3 receive a mobile terminal UE 1 signal, those three base stations each measure the mobile terminal UE 1 propagation delay, and then coordinated reception base stations (non-serving stations) eNB 1 and eNB 3 report measured propagation delays T (1, 1) and T (1, 3) to serving station eNB 2, and serving station eNB 2 decides a time advancement amount based on the received propagation delays. The time advancement amount algorithm used by serving station eNB 2 can be generalized using one simple function.

$$TA\,(i)=f(\{T\,(i,j)\}) \quad \dots \text{(Equation 1)}$$

In equation 1, TA (i) is a time advancement amount for terminal i, f() is a function that decides a time advancement amount, and T (i, j) is a propagation delay from terminal i to each base station j. Equation 1 explains that, with a conventional method, time advancement amount setting relates only to differences in propagation delay from a terminal to base stations.

Citation List

Non-Patent Literature

NPL 1
3GPP TR 36.814 (2009-01)

Summary of Invention

Technical Problem

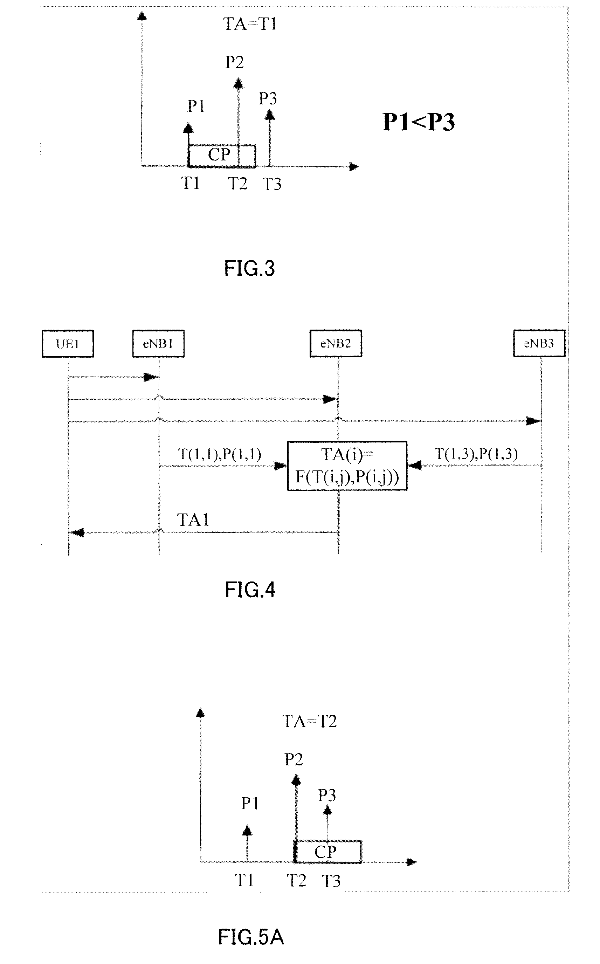

However, if the difference between the maximum propagation delay and minimum propagation delay exceeds the width of a reception time window, a conventional method -- and method 2, in particular -- is no longer desirable. FIG. 3 shows and explains an actual example of a case in which the difference between the maximum propagation delay and minimum propagation delay exceeds the width of a reception time window. In FIG.3, propagation delay difference $T(1, 3) - T(1, 1)$ is less than the reception window width, but power P1 of a channel response corresponding to delay $T(1, 1)$ is smaller than power P3 of a channel response corresponding to delay $T(1, 3)$. If a time advancement amount is set using method 2, as shown in FIG.3, there is a possibility of received signal P3 of higher power than P1 being positioned other than in the reception time window. Consequently, a signal from a terminal is not only erroneously demodulated, but may also become interference.

Solution to Problem

According to one aspect of the present invention, a method is provided for adjusting an uplink time advancement amount in a communication system composed of a mobile terminal and a plurality of base stations, and this method includes: a step of that plurality of base stations measuring propagation delay $T(i, j)$ and channel response power $P(i, j)$ from a mobile terminal to that plurality of base stations (where $T(i, j)$ represents a propagation delay from mobile terminal i to base station j, $P(i, j)$ represents channel response power from mobile terminal i to base station j, and i and j are natural numbers); a step of a non-serving station among that plurality of base stations reporting that measured propagation delay and power to a serving station; and a step of that serving station deciding an uplink time advancement amount of that mobile terminal based on that received propagation delay and power and propagation delay and power measured by that serving station itself, and reporting that time advancement amount to that mobile terminal.

According to the above aspect, that method further includes: a step of that non-serving station comparing that measured propagation delay $T(i, j)$ and propagation delay $T'(i, j)$ previously measured by that non-serving station and determining whether or not an obtained first difference value is larger than a first predetermined threshold value, and/or comparing measured current power $P(i, j)$ and previously measured power $P'(i, j)$ and determining whether or not an obtained second difference value is larger than a second predetermined threshold value; and a step of that non-serving station reporting that measured propagation delay $T(i, j)$ and power $P(i, j)$ to that serving station according to a first difference value being larger than a first predetermined threshold value or a second difference value being larger than a second predetermined threshold value.

According to an above aspect, that method further includes: a step of that serving station reporting propagation delay $T(i, j)$ and power $P(i, j)$ measured beforehand by each base station, stored by itself, to that non-serving station, and that non-serving station deciding a first time advancement amount of a system based on received propagation delay and power and propagation delay $T(i, j)$ and power $P(i, j)$ measured beforehand by itself; a step of that non-serving station deciding a second time advancement amount based on propagation delay $Tn(i, j)$ and power $Pn(i, j)$ newly measured by itself and that received propagation delay $T(i, j)$ and power $P(i, j)$ measured by another base station, and determining whether or not a difference value between a first time advancement amount and second time advancement amount is larger than a third predetermined threshold value, or determining whether or not a difference value between total received power obtained using a first time advancement amount and total received power obtained using a second time advancement amount is larger than a fourth predetermined threshold value; and a step of that non-serving station reporting that new propagation delay $Tn(i, j)$ and power $Pn(i, j)$ to a serving station according to a difference value between a first time advancement amount and second time advancement amount being larger than that third predetermined threshold value, or a difference value between total received power obtained using a first time advancement amount and total received power obtained using a second time advancement amount being larger than that fourth predetermined threshold value.

According to an above aspect, that method further includes: a step of that serving station defining new parameter TP (i, j)=T (i, j)/P (i, j) beforehand, and transmitting min{TP (i, j)} to each non-serving station; a step of each of those non-serving stations measuring new propagation delay Tn (i, j) and power Pn (i, j), and determining whether or not |Tn (i, j)/Pn (i, j)-min{TP (i, j)}| is larger than a fifth predetermined threshold value; and a step of each of those non-serving stations reporting that measured propagation delay Tn (i, j) and power Pn (i, j) to that serving station according to |Tn (i, j)/Pn (i, j)-min{TP (i, j)}| being larger than that fifth predetermined threshold value.

According to an above aspect, that method further includes: a step of that serving station deciding a time advancement amount based on propagation delay and power received from that non-serving station and propagation delay and power measured by itself, and determining whether or not a difference value between that time advancement amount and a previously decided time advancement amount is larger than a sixth predetermined threshold value; and a step of that serving station reporting that time advancement amount to that mobile terminal according to a difference value between that time advancement amount and that previously decided time advancement amount being larger than that sixth predetermined threshold value.

According to an above aspect, that method further includes: a step of a plurality of base stations measuring respectively current propagation delay Tn (i, j) and power Pn (i, j) of that mobile terminal; a step of that non-serving station calculating a first difference value between current propagation delay Tn (i, j) measured by itself and that propagation delay T (i, j), and a second difference value between that current power Pn (i, j) and that power P (i, j), and reporting each difference value to that serving station; and a step of that serving station adding together a received first difference value and that propagation delay T (i, j) measured by that non-serving station and acquiring current propagation delay Tn (i, j) of that non-serving station, adding together a received second difference value and that power P (i, j) of that non-serving station and acquiring current power Pn (i, j) of that non-serving station, deciding a new time advancement amount based on respective current propagation delay Tn (i, j) and current power Pn (i, j), and reporting that new time advancement amount to that mobile terminal.

According to an above aspect, that first difference value is related to the width of a reception window of that base station, and is expressed by "first difference value = (current measured delay value - previous reported value) / reception window width / 2N," where N is a natural number.

According to an above aspect, a method of deciding a time advancement amount is TA (i)=F({T (i, j), P (i, j)}), where TA (i) is a time advancement amount for mobile terminal i, and F() represents a function that decides a time advancement amount.

According to an above aspect, that function F() decides a time advancement amount that maximizes the power of a signal positioned within a reception window.

According to an above aspect, that function F() decides a time advancement amount that maximizes the diversity gain of a signal positioned within a reception window.

According to an above aspect, a quantization interval of that time advancement amount transmitted to that mobile terminal from a serving station via an air-interface is configurable.

According to another aspect of the present invention, a method is provided for adjusting an uplink time advancement amount in a communication system composed of a mobile terminal and a plurality of base stations, and that method includes: a step of that plurality of base stations measuring propagation delay T (i, j) and channel response power P (i, j) from a mobile terminal to that plurality of base stations (where T (i, j) represents a propagation delay from mobile terminal i to base station j, P (i, j) represents channel response power from mobile terminal i to base station j, and i and j are natural numbers); a step of a non-serving station among that plurality of base stations reporting that measured propagation delay and power to a serving station; a step of that serving station deciding which base station configures a coordination area based on that received propagation delay and power, and reporting that coordination area to a terminal and all non-serving stations that transmitted a measurement report; and a step of that serving station deciding an uplink time advancement amount of that mobile terminal based on that propagation delay and that power received from that non-serving station configuring a coordination area and propagation delay and power measured by that serving station itself, and reporting that time advancement amount to that mobile terminal.

According to an above aspect, there are further included: a step of that non-serving station comparing that measured propagation delay T (i, j) and propagation delay T' (i, j) previously measured by that non-serving station and determining whether or not an obtained first difference value is larger than a first predetermined threshold value, and/or comparing measured current power P (i, j) and previously measured power P' (i, j) and determining whether or not an obtained second difference value is larger than a second predetermined threshold value; and a step of that non-serving station reporting that measured propagation delay T (i, j) and power P (i, j) to that serving station according to a first difference value being larger than a first predetermined threshold value or a second difference value being larger than a second predetermined threshold value.

According to an above aspect, there are further included: a step of that serving station reporting propagation delay T (i, j) and power P (i, j) measured beforehand by each base station, stored by itself, to that non-serving station, and that non-serving station deciding a first time advancement amount of a system based on received propagation delay and power and propagation delay T (i, j) and power P (i, j) measured beforehand by itself; a step of that non-serving station deciding a second time advancement amount based on propagation delay Tn (i, j) and power Pn (i, j) newly measured by itself and that received propagation delay T (i, j) and power P (i, j) measured by another base station, and determining whether or not a difference value between a first time advancement amount and second time advancement amount is larger than a third predetermined threshold value, or determining whether or not a difference value between total received power obtained using a first time advancement amount and total received power obtained using a second time advancement amount is larger than a fourth predetermined threshold value; and a step of that non-serving station reporting that new propagation delay Tn (i, j) and power Pn (i, j) to a serving station according to a difference value between a first time advancement amount and second time advancement amount being larger than that third predetermined threshold value, or a difference value between total received power obtained using a first time advancement amount and total received power obtained using a second time advancement amount being larger than that fourth predetermined threshold value.

According to an above aspect, there are further included: a step of that serving station defining new parameter TP (i, j)=T (i, j)/P (i, j) beforehand, and transmitting min{TP (i, j)} to each non-serving station; a step of each of those non-serving stations measuring new propagation delay Tn (i, j) and power Pn (i, j), and determining whether or not |Tn (i, j)/Pn (i, j)-min{TP (i, j)}| is larger than a fifth predetermined threshold value; and a step of each of those non-serving stations reporting that measured propagation delay Tn (i, j) and power Pn (i, j) to that serving station according to |Tn (i, j)/Pn (i, j)-min{TP (i, j)}| being larger than that fifth predetermined threshold value.

According to an above aspect, there are further included: a step of a plurality of base stations measuring respectively current propagation delay Tn (i, j) and power Pn (i, j) of that mobile terminal; a step of that non-serving station calculating a first difference value between current propagation delay Tn (i, j) measured by itself and that propagation delay T (i, j), and a second difference value between that current power Pn (i, j) and that power P (i, j), and reporting each difference value to that serving station; and a step of that serving station adding together a received first difference value and that propagation delay T (i, j) measured by that non-serving station and acquiring current propagation delay Tn (i, j) of that non-serving station, and adding together a received second difference value and that power P (i, j) of that non-serving station and acquiring current power Pn (i, j) of that non-serving station.

According to another aspect of the present invention, a method is provided for adjusting an uplink time advancement amount in a communication system composed of a mobile terminal and a plurality of base stations, and this method includes: a step of that mobile terminal measuring propagation delay from itself to each non-serving station among that plurality of base stations, and reporting measured propagation delay to a serving station; a step of each non-serving station measuring only channel response power of a mobile terminal, and reporting measured power to that serving station; a step of that serving station deciding a time advancement amount based on propagation delay received from a mobile terminal, power information received from a non-serving station, and propagation delay and power measured by a serving station itself; and a step of that serving station reporting that time advancement amount to that mobile terminal.

According to an above aspect, that method further includes: a step of that non-serving station comparing respectively measured current power and power previously measured by that station itself, determining whether or not a compared first difference value is larger than one first predetermined threshold value, and reporting current power measured by that non-serving station to that serving station according to that first difference value being larger than that first predetermined threshold value; and a step of that serving station comparing a decided time advancement amount and a previously decided time advancement amount, determining whether or not a compared second difference value is larger than one second predetermined threshold value, and that serving station reporting that time advancement amount to a mobile terminal according to that second difference value being larger than a second predetermined threshold value.

According to another aspect of the present invention, an apparatus for adjusting an uplink time advancement amount in a mobile communication system is provided that is located in a serving station and includes: a measurement section that measures propagation delay and channel response power from a mobile terminal to a serving station; a transmission/reception section that receives from a non-serving station propagation delay and channel response power from that mobile terminal to that non-serving station; and a time advancement amount deciding section that decides a time advancement amount based on propagation delay and channel response power measured by that measurement section, and propagation delay and channel response power received from that non-serving station; wherein that transmission/reception section transmits a decided time advancement amount to that mobile terminal.

According to an above aspect, that apparatus further includes a calculation section that determines whether or not a difference value between a decided time advancement amount and a previously decided time advancement amount is larger than a predetermined threshold value; wherein the transmission/reception section reports that time advancement amount to that mobile terminal according to a difference value between that time advancement amount and that previously decided time advancement amount being larger than a predetermined threshold value.

According to an above aspect, that calculation section compares measured propagation delay and previously measured propagation delay and determines whether or not an obtained first difference value is larger than a first predetermined threshold value, and/or compares measured channel response power and previously measured power and determines whether or not an obtained second difference value is larger than a second predetermined threshold value; and that transmission/reception section transmits that propagation delay and channel response power to a serving station according to a first difference value being larger than a first predetermined threshold value or a second difference value being larger than a second predetermined threshold value.

According to an above aspect, a method whereby that time advancement amount deciding section decides a time advancement amount is TA $(i)=F(\{T (i, j), P (i, j)\})$, where TA $(i)$ is a time advancement amount for mobile terminal i, $T (i, j)$ represents a propagation delay from mobile terminal i to base station j, $P (i, j)$ represents channel response power from mobile terminal i to base station j, i and j are natural numbers, and $F()$ represents a function that decides a time advancement amount.

According to an above aspect, that function $F()$ decides a time advancement amount that maximizes the power of a signal positioned within a reception window.

According to an above aspect, that function $F()$ decides a time advancement amount that maximizes the diversity gain of a signal positioned within a reception window.

Advantageous Effects of Invention

The present invention provides a new time advancement amount adjustment method and apparatus that enable uplink multipoint reception link performance to be improved. By using the method and apparatus according to the present invention, the effective power of uplink multiple-base-station reception can be optimized, and interference power is effectively reduced.

Brief Description of Drawings

FIG.1 is a drawing showing the framework of a system in which a plurality of base stations perform coordinated reception of uplink signals;

FIG.2 is a signaling flowchart showing an algorithm that sets a time advancement amount in conventional technology;

FIG.3 is a drawing showing a case in which the difference between the maximum propagation delay and minimum propagation delay exceeds the width of a reception time window in conventional technology;

FIG.4 is a drawing showing the signaling flow according to Embodiment 1 of the present invention;

FIG.5A is a drawing showing a time advancement amount decided according to an embodiment of the present invention;

FIG.5B is a drawing showing a time advancement amount decided according to an embodiment of the present invention;

FIG.5C is a drawing showing a time advancement amount decided according to an embodiment of the present invention;

FIG.6 is a drawing showing related sections in a base station arranged according to one embodiment of the present invention;

FIG.7 is a drawing showing the signaling flow according to Embodiment 2 of the present invention;

FIG.8 is a drawing showing the signaling flow according to Embodiment 3 of the present invention;

FIG.9 is a drawing showing the signaling flow according to Embodiment 4 of the present invention;

FIG.10 is a drawing showing the signaling flow according to Embodiment 5 of the present invention;

FIG.11 is a drawing showing the signaling flow according to Embodiment 6 of the present invention;

FIG.12 is a drawing showing the signaling flow according to Embodiment 7 of the present invention;

FIG.13 is a drawing showing the signaling flow according to Embodiment 8 of the present invention;

FIG. 14 is a drawing showing the signaling flow according to Embodiment 9 of the present invention; and

FIG.15 is a drawing showing the signaling flow according to Embodiment 11 of the present invention.

Description of Embodiments

The following detailed description of embodiments of the present invention with reference to the accompanying drawings will make these embodiments of the present invention, and/or other aspects and advantages, clearer and easier to understand.

Actual embodiments of the present invention are described in detail below with reference to the accompanying drawings. Detailed descriptions of a number of related conventional technologies might make the essentials of the present invention less distinct, and therefore such detailed descriptions are not provided here. Elements or sections that execute identical functions are assigned the same reference codes in all the embodiments.

(Embodiment 1)

FIG.4 is a diagrammatic representation of the signaling flow according to Embodiment 1 of the present invention.

As shown in FIG.4, in a method for adjusting an uplink time advancement amount in a communication system composed of a mobile terminal and a plurality of base stations according to Embodiment 1 of the present invention, first, base stations eNB 1, eNB 2, and eNB 3 measure respectively propagation delays T (1,1), T (1, 2), and T (1, 3), and channel response powers P (1, 1), P (1, 2), and P (1, 3), from mobile terminal UE 1, after which measured propagation delays T (1, 1) and T (1, 3) and channel response powers P (1, 1), P (1, 2), and P (1, 3) are reported to serving station eNB 2 by non-serving stations eNB 1 and eNB 3, and then serving station eNB 2 measures an uplink time advancement amount of that mobile terminal based on received delay and power information, and propagation delay and power information measured by itself, after which serving station eNB 2 reports a decided time advancement amount to mobile terminal UE 1.

According to an illustrative embodiment of the present invention, serving station eNB 2 calculates a time advancement amount in accordance with equation 2 below.

$$TA\ (i)=F(\{T\ (i, j), P\ (i, j)\}) \ldots (Equation\ 2)$$

Here, the meanings of TA (i) and T (i, j) are the same as in equation 1. F() represents a function that decides a time advancement amount. P (i, j) is channel response power from mobile terminal i to base station j, where i and j are natural numbers. The greatest distinction between equation 2 and equation 1 is that, whereas in equation 1 time advancement amount TA (i) is no more than a function of different (channel) propagation delays, in equation 2 time advancement amount TA (i) is a function of different propagation delays and channel response powers. Comparing FIG. 2 and FIG.4, it can readily be seen that in the conventional technology of FIG.2, non-serving stations eNB 1 and eNB 3 need only report measured channel propagation delay to serving station eNB 2, whereas in FIG.4 according to Embodiment 1 of the present invention, it is necessary for non-serving stations eNB 1 and eNB 3 to report corresponding channel response power as well as reporting propagation delay.

How function F() in equation 2 is decided can be regarded as an issue handled within a base station. According to one embodiment of the present invention, a method of deciding function F() can be to select time advancement amount TA (i) such that function F() maximizes the power of a signal positioned within a reception window. If time advancement amount TA (i) is decided using this kind of function F(), it is possible for the effect of time advancement amount TA (i) to be improved as shown in FIG.5A.

FIG.5A through FIG.5C are diagrammatic representations of time advancement amounts decided by embodiments of the present invention. In FIG.5A, a time advancement amount is set as TA (i)=T2. T2 is not the minimum propagation delay, but with time advancement amount TA (i) shown in FIG.5A, if the difference between the maximum propagation delay and minimum propagation delay exceeds reception time window width CP, signal P3 having higher power can enter into a reception window of a base station, and therefore the problem of a high-power signal not being accommodated in a base station's reception window, and furthermore of interference being caused, as seen with conventional technology, is solved.

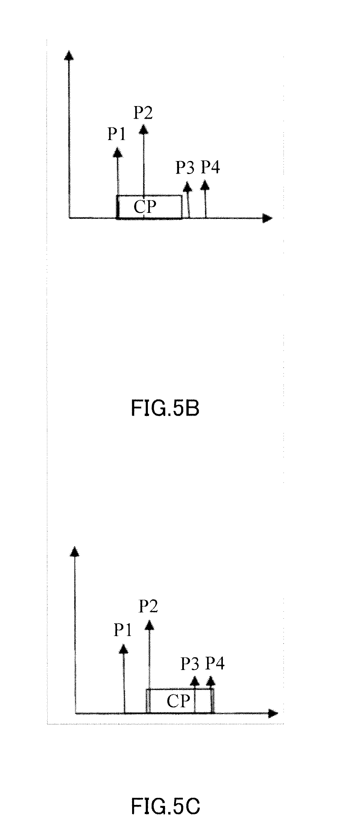

According to another embodiment of the present invention, it is also possible for a TA (i) decision by means of function F() to be made according to another rule, such as one that maximizes diversity gain, for example. FIG.5B is a diagrammatic representation of a time advancement amount decided according to another embodiment of the present invention. In FIG.5B, the relationship between different delayed signal powers is P1>P3-E-P4, but the difference value between P1 and P3+P4 is not large. When a method that maximizes power within a reception window is used, the value of TA (i) shown in FIG.5B should be able to be used. Although P1>P3+P4, since the difference value between P1 and P3+P4 is not large, and power allocation of P3 and P4 is average, if the value of TA (i) shown in FIG.5C is used, the system can obtain larger diversity gain, and system performance can thereby be improved compared with TA (i) shown in FIG.5B.

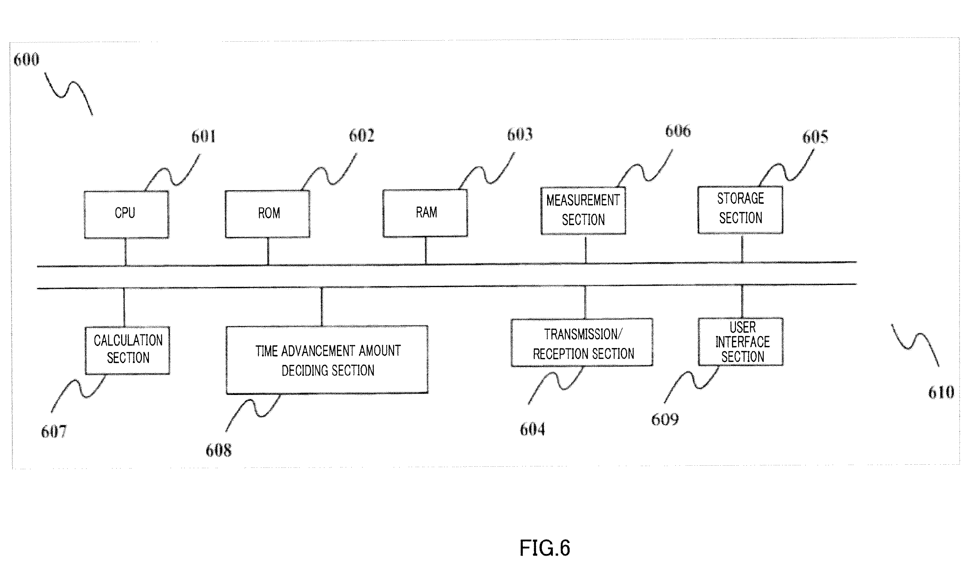

FIG.6 is a diagrammatic representation of related sections in a base station arranged according to one embodiment of the present invention.

As shown in FIG.6, base station apparatus 600 according to one embodiment of the present invention may include central processing unit (CPU) 601 that executes various kinds of system software and application software, processes various kinds of data, and controls the operation of each section within base station apparatus 600, read-only memory (ROM) 602 that stores various kinds of programs necessary for CPU 601 to perform various kinds of processing and control, random access memory (RAM) 603 that stores intermediate data generated incidentally in the process of processing and control by CPU 601, transmission/reception section 604 that is connected to a radio network (not shown) via an antenna (not shown), and transmits and receives various kinds of data and signaling between base station apparatus 600 and mobile terminal UEs, and storage section 605 that stores various kinds of received and/or transmitted data and signaling. Base station apparatus 600 according to that embodiment of the present invention, further includes measurement section 606, calculation section 607, time advancement amount deciding section 608, and/or user interface section 609. Of these, CPU 601 controls the above sections and accomplishes various kinds of functions and operations by executing a control function by execution of a corresponding control program. The above sections are mutually connected by bus line 610.

The actual configuration of above base station apparatus 600 according to one embodiment of the present invention does not limit the scope of the present invention and is no more than an illustrative description, and a number of sections may be omitted, the functions of a number of sections may be executed in an amalgamated fashion by a single section, and/or the functions of a number of sections may be executed divided among a smaller plurality of sections.

Also, a plurality of base stations may be included in a communication system according to an embodiment of the present invention, and each base station may be provided with the same configuration as described above. For convenience of explanation, for each section in base station eNB 1, suffix "-1" is appended to the reference code of each section, so that the measurement section is represented by 606-1, for example, for each section in base station eNB 2, suffix "-2" is appended to the reference code of each section, so that the measurement section is represented by 606-2, for example, for each section in base station eNB 3, suffix "-3" is appended to the reference code of each section, so that the measurement section is represented by 606-3, for example, and likewise for other cases.

With respect to the operation of each section of above base station apparatus 600 according to one embodiment of the present invention, measurement sections 606-1, 606-2, and 606-3 of base stations eNB 1, eNB 2, and eNB 3 measure respectively propagation delays T (1, 1), T (1, 2), and T (1, 3) and channel response powers P (1, 1), P (1, 2), and P (1, 3) from mobile terminal UE 1 to the respective base station, and store each measured data in storage sections 605-1, 605-2, and 605-3 of the respective base station itself, transmission/reception sections 604-1 and 604-3 of non-serving stations eNB 1 and eNB 3 transmit powers P (1, 1) and P (1, 3) to serving station eNB 2, time advancement amount deciding section 608-2 of serving station eNB 2 decides an uplink time advancement amount of that mobile terminal based on equation 2 shown above, based on received delay and power information and propagation delay and power information measured by itself, and finally, transmission/reception section 604-2 of serving station eNB 2 reports a decided time advancement amount to mobile terminal UE 1.

(Embodiment 2)

In Embodiment 1, there may be a problem of signaling overhead when a non-serving station reports delay and power information to a serving station. First, in a method according to an embodiment of the present invention, it is necessary for irregular power information to be transmitted between base stations, and this increases signaling overhead, and since the time advancement amount is updated periodically, the increase in signaling overhead then increases the system load. In order to alleviate the above problem, the embodiment below is presented, in which signaling overhead caused by information transmission between base stations is reduced, and an advantageous effect of the present invention is achieved.

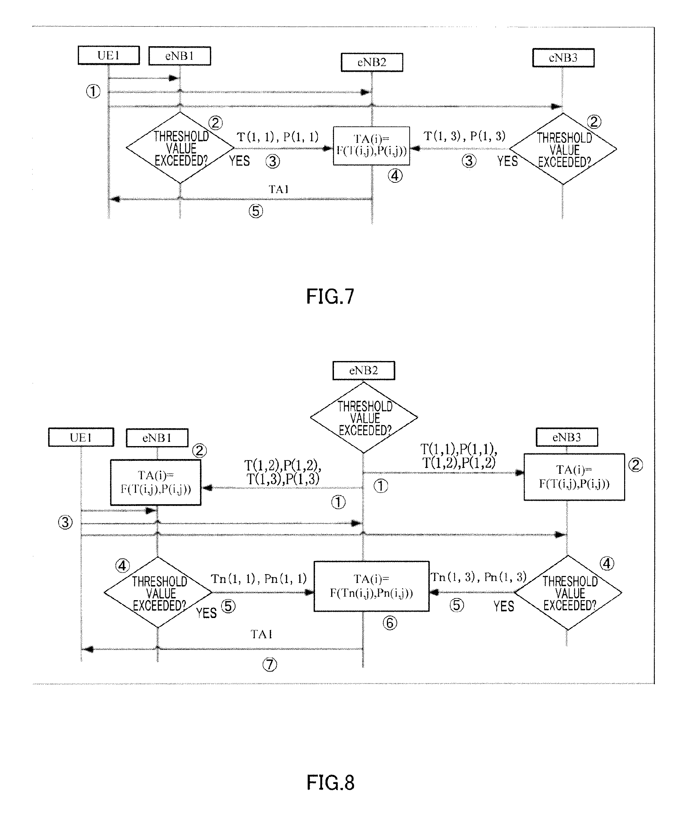

FIG.7 is a diagrammatic representation of the signaling flow according to Embodiment 2 of the present invention.

As shown in FIG.7, in a method of adjusting an uplink time advancement amount according to Embodiment 2 of the present invention, in step ST01 mobile terminal UE 1 propagation delays T (1, 1), T (1, 2), and T (1, 3) and channel response powers P (1, 1), P (1, 2), and P (1, 3) are measured respectively by measurement sections 606-1, 606-2, and 606-3 of base stations eNB 1, eNB 2, and eNB 3, and then the flow proceeds to step ST02.

In step ST02, calculation sections 607-1 and 607-3 of non-serving stations eNB 1 and eNB 3 compare measured current propagation delay T (i, j) and power P (i, j) with propagation delay T' (i, j) and power P' (i, j) previously measured by those non-serving stations eNB 1 and eNB 3, and determine whether or not the comparison difference value is larger than a predetermined threshold value. For example, if current propagation delay measured by measurement section 606-1 of non-serving station eNB 1 is T (1, 1), and previously measured propagation delay is T' (1, 1), calculation section 607-1 of non-serving station eNB 1 calculates the value of |T (1, 1) - T' (1, 1)| and determines whether or not |T (1, 1) - T' (1, 1)|≥AT/2 (where AT is a threshold value set within the base station system), or, for example, if current channel response power measured by measurement section 606-1 of non-serving station eNB 1 is P (1, 1), and previously measured channel response power is P' (1, 1), calculation section 607-1 of non-serving station eNB 1 calculates the value of |P (1, 1) - P' (1, 1))| and determines whether or not |P (1, 1) - P' (1, 1)|≥AP/N (where AP is a threshold value set within the base station system, and N is the number of receiving base stations). If either of the above two conditions is satisfied, the flow proceeds to step ST03. Non-serving station eNB 3 also executes the same kind of operation as non-serving station eNB 1.

In step ST03, transmission/reception sections 604-1 and 604-3 of non-serving stations eNB 1 and eNB 3 report measured current propagation delays T (1, 1) and T (1, 3) and current powers P (1, 1) and P (1, 3) to serving station eNB 2, and then the flow proceeds to step ST04.

In step ST04, time advancement amount deciding section 608-2 of serving station eNB 2 decides uplink time advancement amount TA (i) of the relevant mobile terminal based on received propagation delay and power information and propagation delay and channel response power measured by itself, and then the flow proceeds to step ST05. The method whereby time advancement amount deciding section 608-2 of serving station eNB 2 decides time advancement amount TA (i) is similar to the method in Embodiment 1, and will not be described again here.

In step ST05, transmission/reception section 604-2 of serving station eNB 2 transmits decided time advancement amount TA (i) to mobile terminal UE 1.

The distinction between Embodiment 2 and Embodiment 1 lies in the diamond-shaped block parts in FIG.7 -- that is, step ST02. The function of these diamond-shaped blocks in Embodiment 2 is threshold value determination, and after a non-serving station has periodically measured new propagation delay and power, these are not reported immediately to the serving station, but instead, threshold value determination is first performed, and measured values are only reported to the serving station after a certain condition is satisfied. Thus, in Embodiment 2 reporting is performed based on an event trigger, whereas in Embodiment 1 reporting is performed based on a time trigger or periodically. Therefore, event trigger based Embodiment 2 effectively reduces unnecessary reporting from a non-serving station to a serving station. In Embodiment 2, there are two conditions for times for triggering a report. The first condition is that the difference between an original propagation delay measured value and a new channel measured value is larger than $\Delta T/2$, and the second condition is that the difference between an original channel response power measured value and a new channel response power measured value is larger than $\Delta P/N$, where N is the number of multipoint reception base stations, and $\Delta T$ and $\Delta P$ are parameters set by the system beforehand. If either of these two conditions is satisfied, an event is triggered.

Using Embodiment 2 of the present invention enables signaling overhead between base stations to be effectively reduced.

(Embodiment 3)

FIG.8 is a diagrammatic representation of the signaling flow according to Embodiment 3 of the present invention.

As shown in FIG.8, in a method of adjusting an uplink time advancement amount according to Embodiment 3 of the present invention, in step ST01, if one predetermined condition (a threshold value determination condition "Is the threshold value exceeded?" is possible as in step ST04 in Embodiment 5 described later herein) is satisfied, transmission/reception section 604-2 of serving station eNB 2 reports all propagation delay and power information to non-serving stations eNB 1 and eNB 3. Here, transmission/reception section 604-2 of serving station eNB 2 reports stored propagation delay and power information measured beforehand by all related base stations to a non-serving station. That is to say, propagation delays T (1, 2) and T (1, 3) and channel response powers P (1, 2) and P (1, 3) are reported to non-serving station eNB 1, and propagation delays T (1, 1) and T (1, 2) and channel response powers P (1, 1) and P(1, 2) are reported to non-serving station eNB 3. Following this, the flow proceeds to step ST02.

Then, in step ST02, time advancement amount deciding sections 608-1 and 608-3 of non-serving stations eNB 1 and eNB 3 decide a system time advancement amount for that time based on received propagation delay and power information and propagation delay and power information measured beforehand by those stations. In this process, time advancement amount deciding sections 608-1 and 608-3 of non-serving stations eNB 1 and eNB 3 decide a time advancement amount using the same kind of method as serving station eNB 2 -- that is, using equation 2 in Embodiment 1. Following this, the flow proceeds to step ST03.

In step ST03, measurement sections 606-1, 606-2, and 606-3 of base stations eNB 1, eNB 2, and eNB 3 each measure new propagation delay and power information, and represent these items of information as Tn and Pn. That is to say, measurement section 606-1 of non-serving station eNB 1 measures new propagation delay Tn (1, 1) and new channel response power Pn (1, 1), measurement section 606-3 of non-serving station eNB 3 measures new propagation delay Tn (1, 3) and new channel response power Pn (1, 3), and measurement section 606-2 of serving station eNB 2 measures new propagation delay Tn (1, 2) and new channel response power Pn (1, 2). Following this, the flow proceeds to step ST04.

In step ST04, time advancement amount deciding sections 608-1 and 608-3 of non-serving stations eNB 1 and eNB 3 decide a "new" time advancement amount based on new propagation delay and power information measured by measurement sections 606-1 and 606-3 of those stations, and perform event determination. Here, a "new" time advancement amount is obtained based on propagation delay and power information newly measured by those stations (eNB 1 and eNB 3), and old measurement information (propagation delay and power) of another base station previously obtained from serving station eNB 2. Here, the method whereby time advancement amount deciding section 608 of a non-serving station decides a time advancement amount is similar to the method used in Embodiment 1.

More specifically, calculation sections 607-1 and 607-3 of non-serving stations eNB 1 and eNB 3 compare a decided current time advancement amount and total received power obtained using a current time advancement amount with a time advancement amount previously decided by those non-serving stations eNB 1 and eNB 3 and total received power obtained using that time advancement amount, and determine whether or not the comparison difference value is larger than a predetermined threshold value. Specifically, if a current time advancement amount decided by time advancement amount deciding section 608-1 of non-serving station eNB 1 is TAn (1, 1), and a previous time advancement amount is TA (1, 1), calculation section 607-1 of non-serving station eNB 1 calculates the value of |TAn (1, 1) - TA (1, 1)| and determines whether or not |TAn (1, 1) - TA (1, 1)|>AT, or, if total received power obtained by non-serving station eNB 1 using a current time advancement amount is PAn (1, 1), and total received power obtained using a previous time advancement amount is PA (1, 1), calculation section 607-1 of non-serving station eNB 1 calculates the value of |PAN (1, 1) - PA (1, 1)| and determines whether or not |PAn (1, 1) - PA (1, 1)|>AP. If either of the above two conditions is satisfied, the flow proceeds to step ST05. Non-serving station eNB 3 also executes the same kind of operation as non-serving station eNB 1.

Here, a trigger event is defined as two conditions, the first condition being that a difference value of time advancement amounts obtained in step ST02 and step ST04 is larger than ΔT, and the second condition being that a difference value of total power obtained using two time advancement amounts is larger than ΔP. If either the first condition or the second condition is satisfied, an event is triggered. The definitions of ΔT and ΔP are similar to the definitions given in Embodiment 2.

In step ST05, transmission/reception sections 604-1 and 604-3 of non-serving stations eNB 1 and eNB 3 report measured current propagation delay Tn (1, 1) and/or Tn (1, 3) and current power Pn (1, 1) and/or Pn (1, 3) to serving station eNB 2, and then the flow proceeds to step ST06.

In step ST06, time advancement amount deciding section 608-2 of serving station eNB 2 decides new uplink time advancement amount TAn (i) based on received propagation delay and power information and propagation delay and power measured by itself. Following this, the flow proceeds to step ST07.

In step ST07, transmission/reception section 604-2 of serving station eNB 2 transmits decided new time advancement amount TAn (i) to mobile terminal UE 1.

The method whereby time advancement amount deciding section 608-2 of serving station eNB 2 decides time advancement amount TAn (i) in step ST06 is similar to the method in Embodiment 1, and will not be described again here.

Using Embodiment 3 of the present invention enables signaling overhead between base stations to be effectively reduced.

(Embodiment 4)

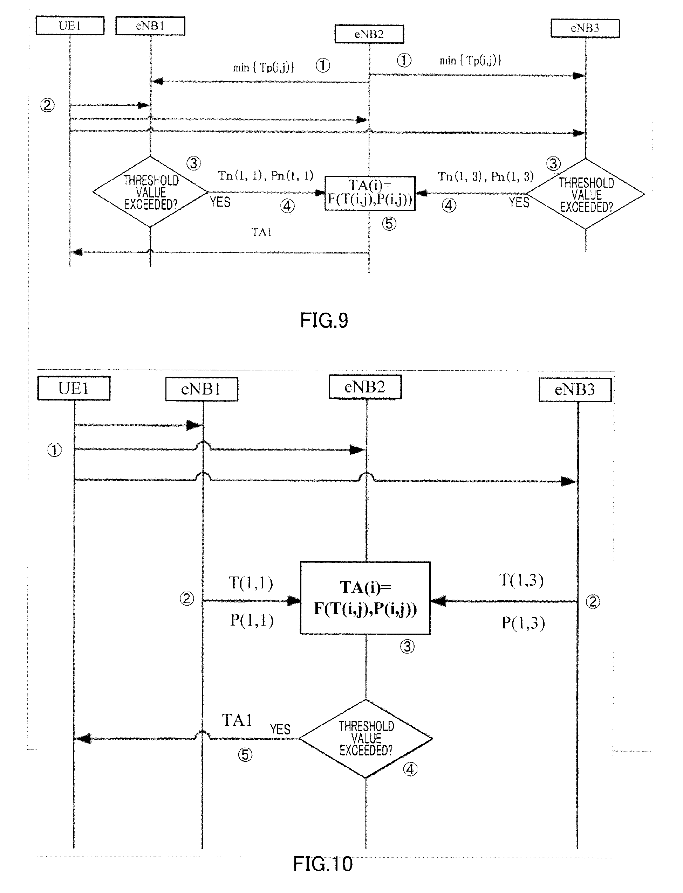

FIG.9 is a diagrammatic representation of the signaling flow according to Embodiment 4 of the present invention.

As shown in FIG.9, in a method of adjusting an uplink time advancement amount according to Embodiment 4 of the present invention, in step ST01 new parameter TP (i, j)=T (i, j)/P (i, j) is defined by serving station eNB 2, and transmission/reception section 604-2 of serving station eNB 2 transmits a minimum TP (i, j) -- that is, min{TP (i, j)} -- to non-serving stations eNB 1 and eNB 3. Here, T (i, j) represents a propagation delay from mobile terminal i to base station j, P (i, j) represents channel response power from mobile terminal i to base station j, and new parameter TP (i, j) is equivalent to performing weighting on propagation delay using power. Thus, transmission/reception section 604-2 of serving station eNB 2 can directly provide a minimum TP (i, j) to non-serving stations eNB 1 and eNB 3 as an event trigger reference. Following this, the flow proceeds to step ST02.

In step ST02, measurement sections 606-1, 606-2, and 606-3 of base stations eNB 1, eNB 2, and eNB 3 each measure new propagation delay and power information, and represent these items of information as Tn and Pn. That is to say, measurement section 606-1 of non-serving station eNB 1 measures new propagation delay Tn (1, 1) and new channel response power Pn (1, 1), measurement section 606-3 of non-serving station eNB 3 measures new propagation delay Tn (1, 3) and new channel response power Pn (1, 3), and measurement section 606-2 of serving station eNB 2 measures new propagation delay Tn (1, 2) and new channel response power Pn (1, 2). Following this, the flow proceeds to step ST03.

In step ST03, a non-serving station configures an event using newly measured propagation delay and power information, that event being defined as |Tn (i, j)/Pn (i, j)-min{TP (i, j)}|>ΔTp, where ΔTp is a parameter set beforehand within the base station system. More specifically, calculation section 607-1 of non-serving station eNB 1 calculates Tn (1, 1)/Pn (1, 1) and determines whether or not a difference value between value Tn (1, 1)/Pn (1, 1) and min{TP (i, j)} is larger than predetermined threshold value ΔTp, and calculation section 607-3 of non-serving station eNB 3 calculates Tn (1, 3)/Pn (1, 3) and determines whether or not a difference value between value Tn (1, 3)/Pn (1, 3) and min{TP (i, j)} is larger than predetermined threshold value ΔTp. When an event is triggered, the flow proceeds to step ST04 as soon as an above condition is satisfied.

In step ST04, transmission/reception section 604-1 and/or 604-3 of non-serving stations eNB 1 and/or eNB 3 for which a condition is satisfied report measured current propagation delay $Tn(1, 1)$ and/or $Tn(1, 3)$ and current power $Pn(1, 1)$ and/or $Pn(1, 3)$ to serving station eNB 2, and then the flow proceeds to step ST05.

In step ST05, time advancement amount deciding section 608-2 of serving station eNB 2 decides new uplink time advancement amount $TAn(i)$ based on received propagation delay and power information and propagation delay and power measured by itself. Following this, the flow proceeds to step ST06.

In step ST06, transmission/reception section 604-2 of serving station eNB 2 transmits decided new time advancement amount $TAn(i)$ to mobile terminal UE 1.

The method whereby time advancement amount deciding section 608-2 of serving station eNB 2 decides time advancement amount $TAn(i)$ in step ST05 is similar to the method in Embodiment 1, and will not be described again here.

By using Embodiment 4 of the present invention, information transmission from a serving station to a non-serving station is greatly compressed, and an event trigger determination process within a non-serving station is simplified.

(Embodiment 5)

FIG.10 is a diagrammatic representation of the signaling flow according to Embodiment 5 of the present invention.

As shown in FIG.10, in a method of adjusting an uplink time advancement amount according to Embodiment 5 of the present invention, in step ST01 measurement sections 606-1, 606-2, and 606-3 of base stations eNB 1, eNB 2, and eNB 3 measure respectively mobile terminal UE 1 propagation delays $T(1, 1)$, $T(1, 2)$, and $T(1, 3)$, and channel response powers $P(1, 1)$, $P(1, 2)$, and $P(1, 3)$. Following this, the flow proceeds to step ST02.

In step ST02, transmission/reception sections 604-1 and 604-3 of non-serving stations eNB 1 and eNB 3 report measured propagation delays $T(1, 1)$ and $T(1, 3)$ and powers $P(1, 1)$ and $P(1, 3)$ to serving station eNB 2. Following this, the flow proceeds to step ST03.

In step ST03, time advancement amount deciding section 608-2 of serving station eNB 2 decides uplink time advancement amount $TA(i)$ based on received propagation delay and power information and propagation delay and channel response power information measured by measurement section 606-2 of serving station eNB 2. Following this, the flow proceeds to step ST04.

In step ST04, calculation section 607-2 of serving station eNB 2 compares decided time advancement amount $TA(i)$ with previously decided time advancement amount $TA'(i)$, and determines whether or not the comparison difference value is larger than predetermined threshold value AT. If the comparison difference value is determined to be larger than predetermined threshold value AT, the flow proceeds to step ST05.

In step ST05, transmission/reception section 604-2 of serving station eNB 2 reports decided time advancement amount $TA(i)$ to mobile terminal UE 1.

The main distinction between Embodiment 5 and Embodiment 1 is that event determination is performed after a serving station obtains a time advancement amount, and a new time advancement amount is only reported to a mobile terminal when an event is satisfied. In this way, a number of unnecessary time advancement amount updates are avoided on an air-interface.

(Embodiment 6)

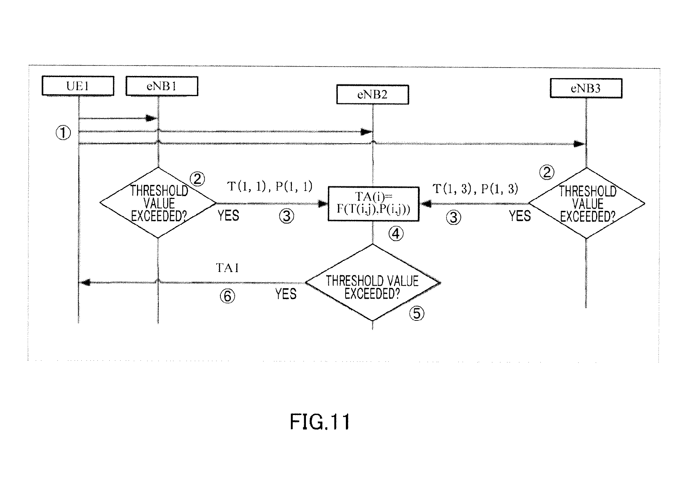

FIG.11 is a diagrammatic representation of the signaling flow according to Embodiment 6 of the present invention.

As shown in FIG.11, in a method of adjusting an uplink time advancement amount according to Embodiment 6 of the present invention, in step ST01 mobile terminal UE 1 propagation delays $T(1, 1)$, $T(1, 2)$, and $T(1, 3)$ and channel response powers $P(1, 1)$, $P(1, 2)$, and $P(1, 3)$ are measured respectively by measurement sections 606-1, 606-2, and 606-3 of base stations eNB 1, eNB 2, and eNB 3, and then the flow proceeds to step ST02.

In step ST02, calculation sections 607-1 and 607-3 of non-serving stations eNB 1 and eNB 3 compare measured current propagation delay and power with propagation delay and power previously measured by those non-serving stations eNB 1 and eNB 3, and determine whether or not the comparison difference value is larger than a predetermined threshold value. For example, if current propagation delay measured by measurement section 606-1 of non-serving station eNB 1 is $T(1, 1)$, and previously measured propagation delay is $T'(1, 1)$, calculation section 607-1 of non-serving station eNB 1 calculates the value of $|T(1, 1) - T'(1, 1)|$ and determines whether or not $|T(1, 1) - T'(1, 1)| > AT/2$ (where AT is a threshold value set within the base station system), or, for example, if current channel response power measured by measurement section 606-1 of non-serving station eNB 1 is $P(1, 1)$, and previously measured channel response power is $P'(1, 1)$, calculation section 607-1 of non-serving station eNB 1 calculates the value of $|P(1, 1) - P'(1, 1)|$ and determines whether or not $|P(1, 1) - P'(1, 1)| > AP/N$ (where AP is a threshold value set within the base station system, and N is the number of receiving base stations). If either of the above two conditions is satisfied, the flow proceeds to step ST03. Non-serving station eNB 3 also executes the same kind of operation as non-serving station eNB 1.

In step ST03, transmission/reception sections 604-1 and 604-3 of non-serving stations eNB 1 and eNB 3 report measured current propagation delays T (1, 1) and T (1, 3) and current powers P (1, 1) and P (1, 3) to serving station eNB 2, and then the flow proceeds to step ST04.

In step ST04, time advancement amount deciding section 608-2 of serving station eNB 2 decides new time advancement amount TA (i) based on received propagation delay and power information and propagation delay and channel response power measured by itself. The method whereby time advancement amount deciding section 608-2 of serving station eNB 2 decides time advancement amount TA (i) is similar to the method in Embodiment 1. Following this, the flow proceeds to step ST05.

In step ST05, calculation section 607-2 of serving station eNB 2 compares measured time advancement amount TA (i) with previously decided time advancement amount TA'(i), and determines whether or not the comparison difference value is larger than predetermined threshold value AT. If the comparison difference value is determined to be larger than predetermined threshold value AT, the flow proceeds to step ST06.

In step ST06, transmission/reception section 604-2 of serving station eNB 2 transmits decided time advancement amount TA (i) to mobile terminal UE 1.

The main distinction between Embodiment 6 and Embodiment 2 is that event determination is performed after a serving station obtains a time advancement amount, and a new time advancement amount is only reported to a mobile terminal when an event is satisfied. In this way, a number of unnecessary time advancement amount updates are avoided on an air-interface.

(Embodiment 7)

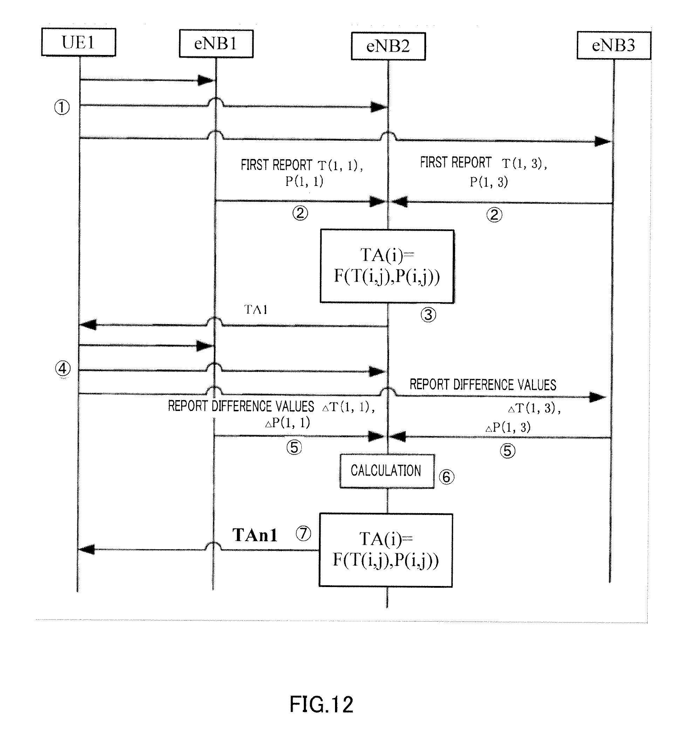

FIG.12 is a diagrammatic representation of the signaling flow according to Embodiment 7 of the present invention.

As shown in FIG.12, in a method of adjusting an uplink time advancement amount according to Embodiment 7 of the present invention, in step ST01 measurement sections 606-1, 606-2, and 606-3 of base stations eNB 1, eNB 2, and eNB 3 measure respectively mobile terminal UE 1 propagation delays T (1, 1), T (1, 2), and T (1, 3), and channel response powers P (1, 1), P (1, 2), and P (1, 3). Following this, the flow proceeds to step ST02.

In step ST02, transmission/reception sections 604-1 and 604-3 of non-serving stations eNB 1 and eNB 3 report measured propagation delays T (1, 1) and T (1, 3) and powers P (1, 1) and P (1, 3) to serving station eNB 2. Following this, the flow proceeds to step ST03.

In step ST03, time advancement amount deciding section 608-2 of serving station eNB 2 decides new time advancement amount TA (i) based on received propagation delay and power information and propagation delay and power information measured by itself, and reports decided new time advancement amount TA (i) to mobile terminal UE 1 by means of transmission/reception section 604-2.

Following this, the flow proceeds to step ST04. In step ST04, the measurement sections of base stations eNB 1, eNB 2, and eNB 3 repeat the operation of step ST01. That is to say, mobile terminal UE 1 current propagation delays Tn (1, 1), Tn (1, 2), and Tn (1, 3) and channel response powers Pn (1, 1), Pn (1, 2), and Pn (1, 3) are measured respectively. Following this, the flow proceeds to step ST05.

In step ST05, calculation section 607-1 of non-serving station eNB 1 calculates difference value |Tn (1, 1) - T (1, 1)| between current propagation delay Tn (1, 1) and previously measured propagation delay T (1, 1), and difference value |Pn (1,1) - P (1, 1)| between current channel response power Pn (1, 1) and previously measured channel response power P (1, 1), and reports the two calculated difference values to serving station eNB 2 by means of transmission/ reception section 604-1. Calculation section 607-3 of non-serving station eNB 3 calculates difference value |Tn (1, 3) - T (1, 3)| between current propagation delay Tn (1, 3) and previously measured propagation delay T (1, 3), and difference value |Pn (1, 3) - P (1, 3)| between current channel response power Pn (1, 3) and previously measured channel response power P (1, 3), and reports the two calculated difference values to serving station eNB 2 by means of transmission/ reception section 604-3. Following this, the flow proceeds to step ST06.

In step ST06, calculation section 607-2 of serving station eNB 2 performs calculation based on received respective difference values and previous respective propagation delay and power values, and obtains a respective current propagation delay and power. Specifically, calculation section 607-2 of serving station eNB 2 adds together received difference value |Tn (1, 1) - T (1, 1)| and previous propagation delay T (1, 1) and acquires current propagation delay Tn (1, 1), adds together received difference value |Pn (1, 1) - P (1, 1)| and previous power P (1, 1) and acquires current power Pn (1, 1), adds together received difference value |Tn (1, 3) - T (1, 3)| and previous propagation delay T (1, 3) and acquires current propagation delay Tn (1, 3), and adds together received difference value |Pn (1, 3) - P (1, 3)| and previous power P (1, 3) and acquires current power Pn (1, 3). Following this, the flow proceeds to step ST07.

In step ST07, time advancement amount deciding section 608-2 of serving station eNB 2 decides new time advancement amount TA (i) based on obtained current propagation delays Tn (1, 1), Tn (1, 2), and Tn (1, 3) and channel response powers Pn (1, 1), Pn (1, 2), and Pn (1, 3), and reports decided new time advancement amount TAn (i) to mobile terminal UE 1 by means of transmission/reception section 604-2. The method whereby time advancement amount deciding section 608-2 of serving station eNB 2 decides time advancement amount TAn (i) is similar to the method in Embodiment 1, and will not be described again here.

Embodiment 7 shows a reporting method when a non-serving station reports delay and power information to a serving station. The first time, an actual measured value is reported, and when a report is made again after the first report, only a difference value between a current measured value and previously reported measured value is reported. In this way, signaling overhead between base stations can be reduced. Also, according to another embodiment of the present invention, a reported propagation delay difference value is related to the length of a cyclic prefix. The cyclic prefix may be of different length in a number of radio communication systems. That is to say, the reception window width is variable. Thus, a reported propagation delay difference value is expressed by "delay difference value = (current measured delay value - previous reported value) / reception window width / 2N," where N is a natural number.

(Embodiment 8)

Since the length of an uplink reference signal is short, there is a possibility of the accuracy of power measurement in an uplink being higher than the accuracy of delay measurement. Embodiment 8 is presented in order to improve the accuracy of delay measurement. In Embodiment 8, while downlink channel delay is measured by a mobile terminal and reported directly to a serving station, a non-serving station need only measure a power value and report this to a serving station. In a radio system, uplink delay and downlink delay can be regarded as symmetrical, while uplink channel response power and downlink channel response power are generally asymmetrical. Consequently, it is possible for a mobile terminal to measure only propagation delay.

In a mobile terminal according to Embodiment 8 of the present invention, there are included a measurement section (not shown) that measures propagation delay from that mobile terminal to a base station, and a transmission/ reception section (not shown) that receives various kinds of data and signaling from a base station.

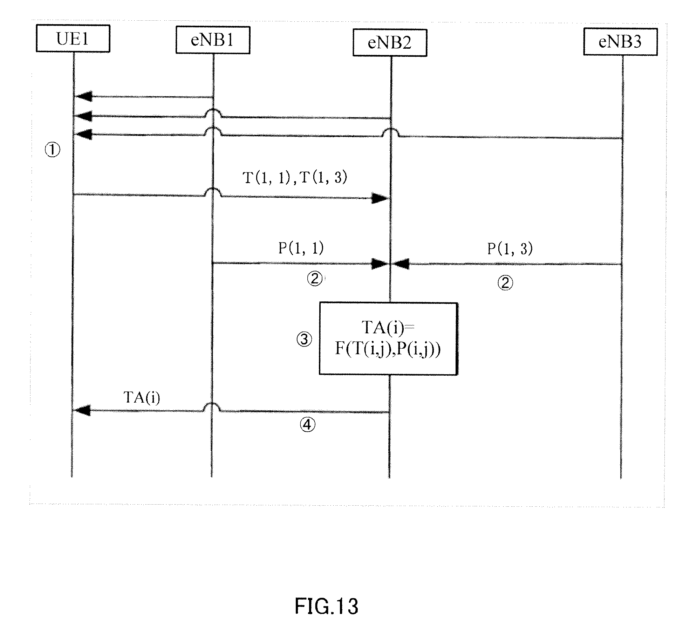

FIG.13 is a diagrammatic representation of the signaling flow according to Embodiment 8 of the present invention.

As shown in FIG.13, in a method of adjusting an uplink time advancement amount according to Embodiment 8 of the present invention, in step ST01 a measurement section (not shown) of mobile terminal UE 1 measures propagation delays T (1, 1) and T (1, 3) from that mobile terminal to non-serving stations eNB 1 and eNB 3, and a transmission/ reception section (not shown) reports measured propagation delays T (1, 1) and T (1, 3) to serving station eNB 2. Following this, the flow proceeds to step ST02.

In step ST02, measurement sections 606-1 and 606-3 of non-serving stations eNB 1 and eNB 3 measure only mobile terminal UE 1 channel response powers P (1, 1) and P (1, 3), and report measured powers P (1, 1) and P (1, 3) to serving station eNB 2 by means of transmission/reception sections 604-1 and 604-3, after which the flow proceeds to step ST03.

In step ST03, time advancement amount deciding section 608-2 of serving station eNB 2 decides time advancement amount TA (i) based on propagation delays T (1, 1) and T (1, 3) received from mobile terminal UE 1, power information P (1, 1) and P (1, 3) received from non-serving stations eNB 1 and eNB 3, and propagation delay T (1, 2) and power P (1, 2) measured by serving station eNB 2 itself. The method whereby time advancement amount deciding section 608-2 of serving station eNB 2 decides time advancement amount TA (i) is similar to the method in Embodiment 1, and will not be described again here. Following this, the flow proceeds to step ST04.

In step ST04, transmission/reception section 604-2 of serving station eNB 2 reports time advancement amount TA (i) to mobile terminal UE 1.

Using Embodiment 8 of the present invention enables signaling overhead between base stations to be effectively reduced.

(Embodiment 9)

In a mobile terminal according to Embodiment 9 of the present invention, there are included a measurement section (not shown) that measures propagation delay from that mobile terminal to a base station, and a transmission/ reception section (not shown) that receives various kinds of data and signaling from a base station.

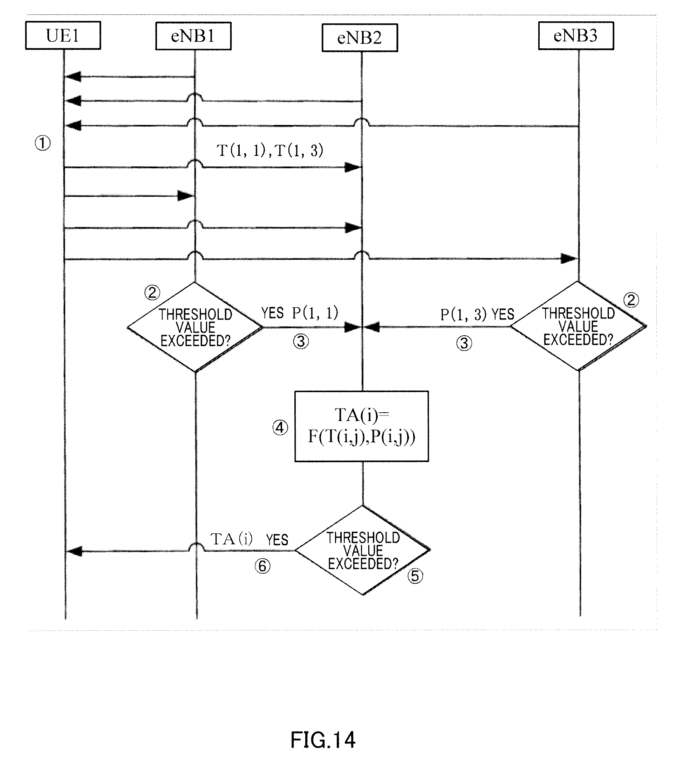

FIG.14 is a diagrammatic representation of the signaling flow according to Embodiment 9 of the present invention.

As shown in FIG.14, in a method of adjusting an uplink time advancement amount according to Embodiment 9 of the present invention, in step ST01 a measurement section (not shown) of mobile terminal UE 1 measures propagation delays T (1, 1) and T (1, 3) from that mobile terminal to non-serving stations eNB 1 and eNB 3, and a transmission/ reception section (not shown) reports measured propagation delays T (1, 1) and T (1, 3) to serving station eNB 2.

Following this, the flow proceeds to step ST02.

In step ST02, measurement sections 606-1 and 606-3 of non-serving stations eNB 1 and eNB 3 measure only mobile terminal UE 1 channel response powers P (1, 1) and P (1, 3), and calculation sections 607-1 and 607-3 of non-serving stations eNB 1 and eNB 3 compare measured current power with power previously measured by those non-serving stations eNB 1 and eNB 3, and determine whether or not the comparison difference value is larger than a predetermined threshold value. Specifically, if current channel response power measured by measurement section 606-1 of non-serving station eNB 1 is P (1, 1), and previously measured channel response power is P' (1, 1), calculation section 607-1 of non-serving station eNB 1 calculates the value of |P (1, 1) - P' (1, 1)| and determines whether or not |P (1, 1) - P' (1, 1)|>AP/N (where AP is a threshold value set within the base station system, and N is the number of receiving base stations). If the above condition is satisfied, the flow proceeds to step ST03. Non-serving station eNB 3 also executes the same kind of operation as non-serving station eNB 1.

In step ST03, transmission/reception sections 604-1 and 604-3 of non-serving stations eNB 1 and eNB 3 report measured current powers P (1, 1) and P (1, 3) to serving station eNB 2, and then the flow proceeds to step ST04.

In step ST04, time advancement amount deciding section 608-2 of serving station eNB 2 decides time advancement amount TA (i) based on propagation delays T (1, 1) and T (1, 3) received from mobile terminal UE 1, power information P (1, 1) and P (1, 3) received from non-serving stations eNB 1 and eNB 3, and propagation delay T (1, 2) and power P (1, 2) measured by measurement section 606-2 of serving station eNB 2 itself. The method whereby time advancement amount deciding section 608-2 of serving station eNB 2 decides time advancement amount TA (i) is similar to the method in Embodiment 1, and will not be described again here. Following this, the flow proceeds to step ST05.

In step ST05, calculation section 607-2 of serving station eNB 2 compares decided time advancement amount TA (i) with previously decided time advancement amount TA'(i), and determines whether or not the comparison difference value is larger than predetermined threshold value AT. If the comparison difference value is determined to be larger than predetermined threshold value AT, the flow proceeds to step ST06.

In step ST06, transmission/reception section 604-2 of serving station eNB 2 reports decided new time advancement amount TA (i) to mobile terminal UE 1.

Using Embodiment 9 of the present invention enables signaling overhead between base stations to be effectively reduced.

(Embodiment 10)

According to Embodiment 10 of the present invention, when a time advancement amount is transmitted from serving station eNB 2 to mobile terminal UE 1 via an air-interface, the quantization interval is related to parameter $\Delta T$ set within the base station system. In an existing radio communication system (for example, an LTE system) a quantization interval of a time advancement amount transmitted on an air-interface is fixed. In contrast, system parameter $\Delta T$ of each embodiment of the present invention is configurable, and therefore a corresponding time advancement amount quantization interval is also configurable. For example, if it is assumed that a time advancement amount calculated according to an embodiment of the present invention is 15 ms, since system parameter $\Delta T$ of each embodiment of the present invention is configurable, a system according to an embodiment of the present invention can represent 15 ms by performing automatic arrangement of 4-bit transmitted numeric value 15 (the quantization interval being 1 at this time), or represent 15 ms by performing automatic arrangement of 3-bit transmitted numeric value 5 (the quantization interval being 3 at this time), or represent 15 ms by performing automatic arrangement of 2-bit transmitted numeric value 3 (the quantization interval being 5 at this time), according to the actual conditions. If a time advancement amount is transmitted using a large quantization interval, fewer bits can be used, enabling signaling overhead between base stations to be reduced.

(Embodiment 11)

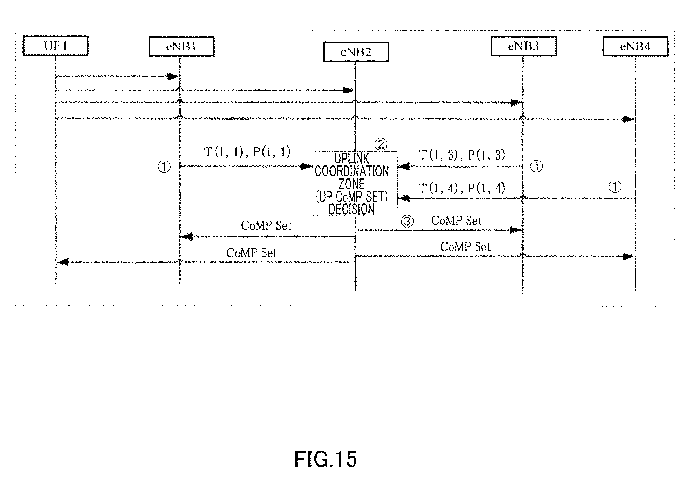

According to Embodiment 11 of the present invention, transmission between base stations of signaling relating to power and propagation delay can be used in an uplink coordination area (UP CoMP set) decision. The actual signaling flow is as shown in FIG.15.

FIG.15 is a diagrammatic representation of the signaling flow according to Embodiment 11 of the present invention.

As shown in FIG.15, in this embodiment a CoMP set decision is divided into the following steps.

In step ST01, non-serving stations eNB 1, eNB 3, and eNB 4 report (channel) propagation delay and channel response power from mobile terminal UE 1 to each base station to serving station eNB 2, and in step ST02, serving station eNB 2 decides which base stations configure a CoMP set based on the received propagation delay and power data. For example, different combinations are decided such as eNB 1 and eNB 3 configuring a CoMP set or eNB 1 and eNB 4 configuring a CoMP set. In step ST03, serving station eNB 2 reports the CoMP set decision to mobile terminal UE 1 and all non-serving stations eNB 1, eNB 3, and eNB 4 that transmitted a measurement report.

In the method according to the above embodiment, serving station eNB 2 also decides a mobile terminal UE 1 uplink time advancement amount based on propagation delay and power received from each non-serving station configuring a CoMP set, and propagation delay and power measured by serving station eNB 2 itself, and reports the decided time advancement amount to that mobile terminal UE 1.

The methods described in Embodiments 2 through 4 and Embodiment 7 can be similarly applied in an improvement of Embodiment 11, and will not be described again here. Embodiment 11 emphasizes a CoMP set decision, while Embodiments 2 through 4 emphasize TA adjustment, but the requirements for signaling transmission between base stations in Embodiment 11 and Embodiment 1 are similar -- that is, uplink propagation delay and power information may be used in a time advancement amount decision, and may be used in a UP CoMP set decision. Therefore, the methods described in Embodiments 2 through 4 and Embodiment 7 can be applied directly to Embodiment 11.

The embodiments described above in the present application are only examples and the actual configurations and operations of the embodiments do not limit the scope of the present invention, and it is possible for those skilled in the art to create a new embodiment by recombining different parts and/or operations in the above embodiments without departing from the scope of the present invention.

Embodiments of the present invention can be implemented by means of hardware, software, firmware, or a method combining these, but the implementation method does not limit the scope of the present invention.

Connection relationships among functional elements (sections) in the above embodiments do not limit the scope of the present invention, and one or a plurality of these elements may include any other functional element, or may be connected to any other functional element.

A number of embodiments of the present invention have been shown and described above with reference to the accompanying drawings, but it will be clear to those skilled in the art that various modifications and amendments may be made to these embodiments without deviating from the principles and spirit of the present invention, and without departing from the scope of the claims of the present invention or the scope of equivalents thereof.

**Claims**

1.   A method for adjusting an uplink time advancement amount in a communication system composed of a mobile terminal and a plurality of base stations, said method comprising:

a step of said plurality of base stations measuring propagation delay T (i, j) and channel response power P (i, j) from a mobile terminal to said plurality of base stations (where T (i, j) represents a propagation delay from mobile terminal i to base station j, P (i, j) represents channel response power from mobile terminal i to base station j, and i and j are natural numbers);
a step of a non-serving station among said plurality of base stations reporting the measured propagation delay and power to a serving station; and
a step of said serving station deciding an uplink time advancement amount of said mobile terminal based on the received propagation delay and power, and the propagation delay and power measured by said serving station itself, and reporting said time advancement amount to said mobile terminal.

2.   The method according to claim 1, further comprising:

a step of said non-serving station comparing the measured propagation delay T (i, j) and propagation delay T' (i, j) previously measured by that non-serving station and determining whether or not an obtained first difference value is larger than a first predetermined threshold value, and/or comparing measured current power P (i, j) and previously measured power P' (i, j) and determining whether or not an obtained second difference value is larger than a second predetermined threshold value; and
a step of said non-serving station reporting the measured propagation delay T (i, j) and power P (i, j) to said serving station according to a first difference value being larger than a first predetermined threshold value or a second difference value being larger than a second predetermined threshold value.

3. The method according to claim 1, further comprising:

a step of said serving station reporting propagation delay T (i, j) and power P (i, j) measured beforehand by each base station, stored by itself, to said non-serving station, and said non-serving station deciding a first time advancement amount of a system based on received propagation delay and power and propagation delay T (i, j) and power P (i, j) measured beforehand by itself;
a step of said non-serving station deciding a second time advancement amount based on propagation delay Tn (i, j) and power Pn (i, j) newly measured by itself and the received propagation delay T (i, j) and power P (i, j) measured by another base station, and determining whether or not a difference value between a first time advancement amount and second time advancement amount is larger than a third predetermined threshold value, or determining whether or not a difference value between total received power obtained using a first time advancement amount and total received power obtained using a second time advancement amount is larger than a fourth predetermined threshold value; and

a step of said non-serving station reporting the new propagation delay Tn (i, j) and power Pn (i, j) to a serving station according to a difference value between a first time advancement amount and second time advancement amount being larger than said third predetermined threshold value, or a difference value between total received power obtained using a first time advancement amount and total received power obtained using a second time advancement amount being larger than said fourth predetermined threshold value.

4. The method according to claim 1, further comprising:

a step of said serving station defining new parameter TP (i, j)=T (i, j)/P (i, j) beforehand, and transmitting min{TP (i,j)} to each non-serving station;

a step of said each non-serving station measuring new propagation delay Tn (i, j) and power Pn (i, j), and determining whether or not |Tn (i, j)/Pn (i, j)-min{TP (i, j)}| is larger than a fifth predetermined threshold value; and

a step of said each non-serving station reporting the measured propagation delay Tn (i, j) and power Pn (i, j) to said serving station according to |Tn (i, j)/Pn (i, j)-min{TP (i, j)}| being larger than said fifth predetermined threshold value.

5. The method according to claim 1 or 2, further comprising:

a step of said serving station deciding a time advancement amount based on propagation delay and power received from said non-serving station and propagation delay and power measured by itself, and determining whether or not a difference value between said time advancement amount and a previously decided time advancement amount is larger than a sixth predetermined threshold value; and

a step of said serving station reporting said time advancement amount to said mobile terminal according to a difference value between said time advancement amount and said previously decided time advancement amount being larger than said sixth predetermined threshold value.

6. The method according to claim 1, further comprising:

a step of a plurality of base stations measuring respectively current propagation delay Tn (i, j) and power Pn (i, j) of said mobile terminal;

a step of said non-serving station calculating a first difference value between current propagation delay Tn (i, j) measured by itself and said propagation delay T (i, j), and a second difference value between said current power Pn (i, j) and said power P (i, j), and reporting each difference value to said serving station; and

a step of said serving station adding together a received first difference value and said propagation delay T (i, j) measured by said non-serving station and acquiring current propagation delay Tn (i, j) of said non-serving station, adding together a received second difference value and said power P (i, j) of said non-serving station and acquiring current power Pn (i, j) of said non-serving station, deciding a new time advancement amount based on respective current propagation delay Tn (i, j) and current power Pn (i, j), and reporting said new time advancement amount to said mobile terminal.

7. The method according to claim 6, wherein said first difference value is related to a width of a reception window of said base station, and is expressed by "first difference value = (current measured delay value - previous reported value) / reception window width / 2N," where N is a natural number.

8. The method according to claim 1 or 2, wherein a method of deciding a time advancement amount is TA (i) =F({T (i, j), P (i, j)}), where TA (i) is a time advancement amount for mobile terminal i, and F() represents a function that decides a time advancement amount.

9. The method according to claim 8, wherein said function F() decides a time advancement amount that maximizes power of a signal positioned within a reception window.

10. The method according to claim 8, wherein said function F() decides a time advancement amount that maximizes diversity gain of a signal positioned within a reception window.

11. The method according to claim 1 or 2, wherein a quantization interval of said time advancement amount transmitted to said mobile terminal from a serving station via an air-interface is configurable.

12. A method for adjusting an uplink time advancement amount in a communication system composed of a mobile terminal and a plurality of base stations, said method comprising:

a step of said plurality of base stations measuring propagation delay $T(i, j)$ and channel response power $P(i, j)$ from a mobile terminal to said plurality of base stations (where $T(i, j)$ represents a propagation delay from mobile terminal i to base station j, $P(i, j)$ represents channel response power from mobile terminal i to base station j, and i and j are natural numbers);

a step of a non-serving station among said plurality of base stations reporting the measured propagation delay and power to a serving station;

a step of said serving station deciding which base station configures a coordination area based on the received propagation delay and power, and reporting that coordination area to a terminal and all non-serving stations that transmitted a measurement report; and

a step of said serving station deciding an uplink time advancement amount of said mobile terminal based on said propagation delay and power received from said non-serving station configuring a coordination area and propagation delay and power measured by said serving station itself, and reporting said time advancement amount to said mobile terminal.

13. The method according to claim 12, further comprising:

a step of said non-serving station comparing the measured propagation delay $T(i, j)$ and propagation delay $T'(i, j)$ previously measured by that non-serving station and determining whether or not an obtained first difference value is larger than a first predetermined threshold value, and/or comparing measured current power $P(i, j)$ and previously measured power $P'(i, j)$ and determining whether or not an obtained second difference value is larger than a second predetermined threshold value; and

a step of said non-serving station reporting the measured propagation delay $T(i, j)$ and power $P(i, j)$ to said serving station according to a first difference value being larger than a first predetermined threshold value or a second difference value being larger than a second predetermined threshold value.

14. The method according to claim 12, further comprising:

a step of said serving station reporting propagation delay $T(i, j)$ and power $P(i, j)$ measured beforehand by each base station, stored by itself, to said non-serving station, and said non-serving station deciding a first time advancement amount of a system based on received propagation delay and power and propagation delay $T(i, j)$ and power $P(i, j)$ measured beforehand by itself;

a step of said non-serving station deciding a second time advancement amount based on propagation delay $Tn(i, j)$ and power $Pn(i, j)$ newly measured by itself and received said propagation delay $T(i, j)$ and power $P(i, j)$ measured by another base station, and determining whether or not a difference value between a first time advancement amount and second time advancement amount is larger than a third predetermined threshold value, or determining whether or not a difference value between total received power obtained using a first time advancement amount and total received power obtained using a second time advancement amount is larger than a fourth predetermined threshold value; and

a step of said non-serving station reporting said new propagation delay $Tn(i, j)$ and power $Pn(i, j)$ to a serving station according to a difference value between a first time advancement amount and second time advancement amount being larger than said third predetermined threshold value, or a difference value between total received power obtained using a first time advancement amount and total received power obtained using a second time advancement amount being larger than said fourth predetermined threshold value.

15. The method according to claim 12, further comprising:

a step of said serving station defining new parameter $TP(i, j)=T(i, j)/P(i, j)$ beforehand, and transmitting $min\{TP(i, j)\}$ to each non-serving station;

a step of said each non-serving station measuring new propagation delay $Tn(i, j)$ and power $Pn(i, j)$, and determining whether or not $|Tn(i, j)/Pn(i, j)-min\{TP(i, j)\}|$ is larger than a fifth predetermined threshold value; and

a step of said each non-serving station reporting the measured propagation delay $Tn(i, j)$ and power $Pn(i,$

j) to said serving station according to |Tn (i, j)/Pn (i, j)-min{TP (i, j)| being larger than said fifth predetermined threshold value.

16. The method according to claim 12, further comprising:

a step of a plurality of base stations measuring respectively current propagation delay Tn (i, j) and power Pn (i, j) of said mobile terminal;

a step of said non-serving station calculating a first difference value between current propagation delay Tn (i, j) measured by itself and said propagation delay T (i, j), and a second difference value between said current power Pn (i, j) and said power P (i, j), and reporting each difference value to said serving station; and

a step of said serving station adding together a received first difference value and said propagation delay T (i, j) measured by said non-serving station and acquiring current propagation delay Tn (i, j) of said non-serving station, and adding together a received second difference value and said power P (i, j) of said non-serving station and acquiring current power Pn (i, j) of said non-serving station.

17. A method for adjusting an uplink time advancement amount in a communication system composed of a mobile terminal and a plurality of base stations, said method comprising:

a step of said mobile terminal measuring propagation delay from itself to each non-serving station among said plurality of base stations, and reporting measured propagation delay to a serving station;

a step of each non-serving station measuring only channel response power of a mobile terminal, and reporting measured power to said serving station;

a step of said serving station deciding said time advancement amount based on propagation delay received from said mobile terminal, power information received from said non-serving station, and propagation delay and power measured by said serving station itself; and

a step of said serving station reporting said time advancement amount to said mobile terminal.

18. The method according to claim 17, further comprising:

a step of said non-serving station comparing respectively measured current power and power previously measured by that station itself, determining whether or not a compared first difference value is larger than one first predetermined threshold value, and reporting current power measured by said non-serving station to said serving station according to said first difference value being larger than said first predetermined threshold value; and

a step of said serving station comparing a decided time advancement amount and a previously decided time advancement amount, determining whether or not a compared second difference value is larger than one second predetermined threshold value, and said serving station reporting said time advancement amount to a mobile terminal according to said second difference value being larger than a second predetermined threshold value.

19. An apparatus that is an apparatus for adjusting an uplink time advancement amount in a mobile communication system and that is located in a serving station, said apparatus comprising:

a measurement section that measures propagation delay and channel response power from a mobile terminal to a serving station;

a transmission/reception section that receives from a non-serving station propagation delay and channel response power from said mobile terminal to said non-serving station; and

a time advancement amount deciding section that decides a time advancement amount based on propagation delay and channel response power measured by said measurement section, and propagation delay and channel response power received from said non-serving station,

wherein said transmission/reception section transmits a decided time advancement amount to said mobile terminal.

20. The apparatus according to claim 19, further comprising a calculation section that determines whether or not a difference value between a decided time advancement amount and a previously decided time advancement amount is larger than a predetermined threshold value,

wherein said transmission/reception section reports said time advancement amount to said mobile terminal according to a difference value between said time advancement amount and said previously decided time advancement amount being larger than a predetermined threshold value.

21. The apparatus according to claim 20, wherein:

said calculation section compares measured propagation delay and previously measured propagation delay and determines whether or not an obtained first difference value is larger than a first predetermined threshold value, and/or compares measured channel response power and previously measured power and determines whether or not an obtained second difference value is larger than a second predetermined threshold value; and

said transmission/reception section transmits said propagation delay and channel response power to a serving station according to a first difference value being larger than a first predetermined threshold value or a second difference value being larger than a second predetermined threshold value.

22. The apparatus according to according to any one of claims 19 through 21, wherein a method whereby said time advancement amount deciding section decides a time advancement amount is TA (i)=F({T (i, j), P (i, j)}), where TA (i) is a time advancement amount for mobile terminal i, T (i, j) represents a propagation delay from mobile terminal i to base station j, P (i, j) represents channel response power from mobile terminal i to base station j, i and j are natural numbers, and F() represents a function that decides a time advancement amount.

FIG.1

FIG.2

TA=T1

P2

P1    P3

CP

T1    T2  T3

**P1<P3**

FIG.3

| UE1 | eNB1 | eNB2 | eNB3 |

$$TA(i)= F(T(i,j),P(i,j))$$

T(1,1),P(1,1)                    T(1,3),P(1,3)

TA1

FIG.4

TA=T2

P2

P3

P1

CP

T1    T2   T3

FIG.5A

FIG.5B

FIG.5C

FIG.6

FIG.7

FIG.8

**FIG.9**

**FIG.10**

FIG.11

FIG.12

| UE1 | eNB1 | eNB2 | eNB3 |

① 

T(1, 1), T(1, 3)

P(1, 1)    P(1, 3)

② ②

③   TA(i)=
    F(T(i,j),P(i,j))

TA(i)

④

FIG.13

FIG.14

FIG.15

# INTERNATIONAL SEARCH REPORT

| International application No. |
| --- |
| PCT/CN2010/071114 |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: H04B7/-; H04B1/-; H04W4/-; H04W24/-; H04W56/-; H04W64/-

Documentation searched other than minimum documentation to the extent that such documents are included in the fields searched

Electronic data base consulted during the international search (name of data base and, where practicable, search terms used)

CNPAT, CNKI, WPI, EPODOC: uplink, delay, latency, power, time, timing advance, base station, serving, multiple

**C. DOCUMENTS CONSIDERED TO BE RELEVANT**

| Category* | Citation of document, with indication, where appropriate, of the relevant passages | Relevant to claim No. |
| --- | --- | --- |
| Y | CN 101166057 A (DATANG MOBILE COMMUNICATION DEVICE CO., LTD.) 23 Apr. 2008(23.04.2008) claims 1-26 | 1-2, 8-11, 17-22 |
| A | | 3-7, 12-16 |
| Y | WO 2008008685 A2 (INTEL CORP) 17 Jan. 2008(17.01.2008) description paragraphs [0013]-[0022] | 1-2, 8-11, 17-22 |
| A | | 3-7, 12-16 |
| P, X | WO 2009101011 A1 (NOKIA CORP et al.) 20 Aug. 2009(20.08.2009) claims 1-28 | 1-2, 8-11, 17-22 |
| A | CN 101278573 A (NTT DOCOMO INC. et al.) 01 Oct. 2008(01.10.2008) the whole document | 1-22 |

☐ Further documents are listed in the continuation of Box C.    ☒ See patent family annex.

| | |
| --- | --- |
|    *     Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 Jun. 2010(14.06.2010) | **24 Jun. 2010 (24.06.2010)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>HAN, Yan<br><br>Telephone No. (86-10)62411701 |
| --- | --- |

Form PCT/ISA /210 (second sheet) (July 2009)

## INTERNATIONAL SEARCH REPORT
Information on patent family members

| International application No. |
| --- |
| PCT/CN2010/071114 |

| Patent Documents referred in the Report | Publication Date | Patent Family | Publication Date |
| --- | --- | --- | --- |
| CN101166057A | 23.04.2008 | NONE | |
| WO2008008685A2 | 17.01.2008 | US2008014960A1 | 17.01.2008 |
| | | WO2008008685A3 | 06.03.2008 |
| | | EP2044732A2 | 08.04.2009 |
| | | KR20090042246A | 29.04.2009 |
| | | CN101491148A | 22.07.2009 |
| | | US7570962B2 | 04.08.2009 |
| WO2009101011A1 | 20.08.2009 | US2009202031A1 | 13.08.2009 |
| CN101278573A | 01.10.2008 | WO2007023772A1 | 01.03.2007 |
| | | JP2007060177A | 08.03.2007 |
| | | EP1919228A1 | 07.05.2008 |
| | | KR20080048476A | 02.06.2008 |
| | | TW200718248A | 01.05.2007 |
| | | US2009247168A1 | 01.10.2009 |

Form PCT/ISA /210 (patent family annex) (July 2009)

## INTERNATIONAL SEARCH REPORT

International application No.

PCT/CN2010/071114

Continuation of the second sheet:

CLASSIFICATION OF SUBJECT MATTER

H04B 7/26(2006.01)i
H04B 1/707(2006.01)n
H04W 4/12(2009.01)n
H04W 24/10(2009.01)n

Form PCT/ISA /210 (extra sheet) (July 2009)